# FASCICULE DE BREVET EUROPEEN

(11) **EP 0 958 855 B1**
(45) Date de publication et mention de la délivrance du brevet: **09.07.2003**
(21) Numéro de dépôt: 99420114.3
(22) Date de dépôt: 07.05.1999
(51) Int. Cl.: B01F 15/04, G05D 11/13

(54) **Installation de production de matériau de moulage par injection et compression**
Anlage zur Herstellung von Materialien für Spritzguss- und Formpressverfahren
Installation for producing injection- and compression moulding material

(30) Priorité: 11.05.1998 FR 9806126
(43) Date de publication de la demande: 24.11.1999
(73) Titulaire: Inoplast, 07340 Saint Desirat (FR); Mecelec Composites et Recyclage, 07300 Tournon sur Rhône (FR)
(72) Inventeur: Gay, Jean-Louis, 07300 Tournon (FR); Courtial, Jean-Pierre, 07300 Tournon (FR)
(74) Mandataire: Myon, Gérard Jean-Pierre

(56) Documents cités:
- EP-A- 0 443 051
- EP-A- 0 566 830
- US-A- 5 681 194
- PATENT ABSTRACTS OF JAPAN vol. 004, no. 031 (P-002), 18 mars 1980 (1980-03-18) & JP 55 003006 A (DOWA MINING CO LTD;OTHERS: 01), 10 janvier 1980 (1980-01-10)
- PATENT ABSTRACTS OF JAPAN vol. 013, no. 024 (C-561), 19 janvier 1989 (1989-01-19) & JP 63 230742 A (TOYOTA MOTOR CORP), 27 septembre 1988 (1988-09-27)

## Description

L'invention a trait à une installation de production de matériau de moulage par injection et compression.

Les matériaux de moulage par injection et compression sont communément utilisés dans l'industrie, notamment pour réaliser des pièces d'aspect ou de structure de véhicules automobiles. Ces matériaux de moulage peuvent se présenter sous forme de matériaux de moulage en feuilles (Sheet Moulding Compound - S.M.C.), sous forme de matériaux de moulage en vrac (Bulk Moulding Compound - B.M.C) ou de matériaux de moulage en vrac à fibres longues (Advanced Moulding Compound - A.M.C.). Les propriétés mécaniques et d'aspect des pièces réalisées à base de ces matériaux dépendent essentiellement de leur composition qui est généralement effectuée à base d'une résine synthétique et de charges minérales ou organiques. Pour obtenir des propriétés acceptables avec une bonne reproductibilité, il est essentiel de contrôler avec précision la composition de ces produits.

Dans les installations de production connues de ces matériaux, le dosage des différents constituants est effectué en disposant des stockeurs ou réservoirs sur des pesons, c'est-à-dire des capteurs aptes à déterminer le poids total de ces dispositifs et du ou des produits qu'ils contiennent. La précision obtenue avec ces pesons est relativement faible, car elle est au mieux de l'ordre du millième de la masse totale mesurée. Ainsi, par exemple lorsqu'un réservoir d'une tonne est utilisé, sa masse ne peut être déterminée qu'à un kilogramme près. Cette relative imprécision est inacceptable pour une production régulière de matériau de moulage.

Pour pallier cet inconvénient, on peut envisager de placer, au bas de chaque réservoir ou stockeur, une trémie également disposée sur pesons et prévue pour contenir une quantité plus faible de produit, de telle sorte que la précision obtenue, qui est également de l'ordre du millième de la masse totale de la trémie, est meilleure. L'utilisation de trémies majore le prix de revient et l'encombrement total de l'installation. Il convient en effet de prévoir des structures de supportage des trémies et un volume suffisant pour leur installation à proximité des réservoirs et stockeurs. Les conduits de convoyage des produits sont modifiés en fonction de l'emplacement des trémies, ce qui les rend plus complexes et peut influer sur leurs caractéristiques d'écoulement.

En outre, les produits contenus dans les trémies sont au contact de l'air ambiant, de sorte qu'ils ont tendance à sécher et à se déposer sur les parois intérieures des trémies, ce qui a deux conséquences essentielles. D'une part, il est possible que de la résine partiellement séchée se détache des parois et soit utilisée pour la production de matériau de moulage, ce qui peut modifier les propriétés physico-chimiques de ce matériau. D'autre part, il faut prévoir de nettoyer régulièrement ces trémies, ce qui est une opération longue et fastidieuse et nécessite l'interruption de la production.

Ces trémies ouvertes dans leurs parties supérieures ne permettent pas d'isoler correctement le produit par rapport à l'atmosphère ambiante, de sorte qu'on ne saurait exclure une pollution accidentelle des produits qu'elles contiennent. Dans tous les cas, et indépendamment de cette pollution potentielle, les produits volatiles contenus dans les pâtes utilisées, tels que par exemple le styrène, ont tendance à s'évaporer, ce qui modifie la composition de ces pâtes.

Par ailleurs, les stockeurs et réservoirs sont prévus pour conserver une pâte ou une résine pendant une durée relativement longue. Pour ce faire, ils comprennent des moyens de brassage, afin d'éviter une décantation de la pâte, et des moyens de contrôle en température, tels qu'une enveloppe à double peau, afin d'éviter les variations de viscosité de la pâte. Les trémies ne sont pas équipées de tels dispositifs car leur coût deviendrait prohibitif, ce qui a pour effet d'augmenter les risques de modification des propriétés physico-chimiques des pâtes qu'elles contiennent.

Enfin, le système de pesée des trémies, qui permet de déterminer le débit de pâte en cours d'écoulement, ne peut pas être efficace lors du remplissage de ces trémies car le calcul du débit est réalisé par détermination de la différence entre une masse instantanée et une masse de référence. En d'autres termes, l'installation doit nécessairement fonctionner sans contrôle du débit de la pâte contenue dans la trémie pendant les phases de remplissage des trémies. En pratique, il s'avère que le temps de remplissage des trémies représente environ 10% du temps d'utilisation total de l'installation, de sorte qu'une installation connue travaille environ à 10% en boucle ouverte, ce qui ne permet pas de garantir une composition homogène des pâtes et donc des matériaux de moulage obtenus.

C'est à ces inconvénients qu'entend plus particulièrement remédier l'invention en proposant une installation de production de matériaux de moulage, qui permet un contrôle efficace de la composition de ces matériaux, ce contrôle étant fiable dans le temps et n'induisant pas de danger de pollution ou de modification de la composition des pâtes utilisées.

Dans cet esprit, l'invention concerne une installation de production de matériau de moulage par injection et compression, à base de résine synthétique et de charges minérales ou organiques, ladite installation comprenant :
- un stockeur de charge alimenté sélectivement, à partir de plusieurs sources de charges différentes, en fonction de la composition choisie ;
- un stockeur de résine alimenté sélectivement, à partir de plusieurs sources de résines de compositions différentes, en fonction de la composition choisie ;
- au moins un stockeur de catalyseur alimenté sélectivement, à partir de plusieurs sources de catalyseurs de compositions différentes, en fonction de la composition choisie ;
- les stockeurs étant prévus pour alimenter un malaxeur apte à mélanger les charges, la résine et le ou les catalyseurs, pour constituer une pâte-mère pour les matériaux de moulage ;
- un mélangeur à vis sans fin dont l'entrée est connectée à la sortie du malaxeur, le débit de pâte-mère en sortie du malaxeur étant contrôlé au moyen d'un débitmètre massique délivrant un signal à une unité de contrôle pilotant une pompe d'entraînement de la pâte-mère entre le malaxeur et le mélangeur ;
- l'entrée du mélangeur à vis sans fin étant également connectée à au moins une source d'un additif.

L'invention permet, grâce au débitmètre massique, de contrôler efficacement les proportions des différents constituants du matériau de moulage, sans utiliser de système de pesée imprécis ou de trémie présentant les inconvénients susmentionnés. En outre, la liaison entre le malaxeur et le mélangeur à vis sans fin peut être réalisée par un conduit fermé dans lequel sont disposés la pompe et le débitmètre, ce conduit pouvant être nettoyé par injection de trains d'air ou d'un solvant des matériaux utilisés. L'invention facilite donc le nettoyage de l'installation.

Selon un premier aspect avantageux de l'invention, le débit d'au moins un additif en entrée du mélangeur est piloté par l'unité de contrôle en fonction du signal du débitmètre massique. En d'autres termes, le débit de la pâte-mère peut être utilisé par l'unité de contrôle comme valeur déterminante pour le ou les débits du ou des additifs.

Selon un autre aspect avantageux de l'invention, au moins une ligne d'alimentation du mélangeur en additif comprend un débitmètre délivrant un signal à l'unité de contrôle. Cet aspect de l'invention permet de contrôler les additifs avec une précision comparable à celle du contrôle du débit de pâte-mère et ce sans utilisation de trémie. Dans le cas de l'utilisation d'un additif sous forme de pâte ou de gelée, tel que par exemple des charges conductrices du type du noir de carbone, cet aspect de l'invention permet de se dispenser de l'utilisation d'une trémie qui, auparavant, devait être nettoyée avec le plus grand soin. Dans le cas d'un colorant, la ligne d'alimentation en colorant peut être aisément nettoyée grâce à un train d'air et de solvant sous pression, à chaque changement de couleur du produit final.

Selon un autre aspect avantageux de l'invention, l'unité de contrôle est apte à piloter la pompe d'entraînement de la pâte-mère et les moyens d'alimentation en additif du mélangeur en fonction du signal de sortie du débitmètre massique et du signal de sortie d'au moins un débitmètre d'une ligne d'alimentation en additif. Selon cet aspect de l'invention, les signaux de tous les débitmètres peuvent être utilisés, par exemple à titre de vérification, par l'unité de contrôle.

Selon un autre aspect avantageux de l'invention, les moyens d'alimentation en additif comprennent une pompe de gavage apte à pomper dans un réservoir de cet additif et apte à alimenter un pot sous pression, ce pot sous pression étant alimenté en air de pressurisation à partir d'une source pilotée par l'unité de contrôle en fonction du signal du débitmètre massique et, éventuellement, du signal d'un débitmètre de contrôle de débit de cet additif. Cette disposition est particulièrement adaptée au cas d'un additif visqueux et se présentant sous la forme d'une pâte ou d'une gelée, comme du noir de carbone.

Dans le cas d'une installation de production de matériau de moulage en feuilles, on peut prévoir que la sortie du mélangeur est raccordée à deux racles de dépôt d'une pâte définitive sur un support souple en cours de défilement, des moyens de dépôt de charges dans une première couche de pâte définitive en cours de défilement sur le support souple étant disposés entre les deux racles, de telle sorte que les charges sont au moins partiellement recouvertes par une seconde couche de pâte définitive issue de l'un des racles. Dans ce cas, l'installation comprend avantageusement deux dispositifs de dépôt de fibres de verre, métalliques ou organiques dans la couche de pâte définitive en cours de défilement, ces dispositifs pouvant être prévus pour déposer des charges différentes.

Dans le cas d'une installation de production de matériau de moulage en vrac, on peut prévoir que la sortie du mélangeur est raccordée à un second malaxeur également alimenté en charges sous forme de fibres coupées, à partir d'un réservoir stockeur.

L'invention sera mieux comprise et d'autres avantages de celle-ci apparaîtront plus clairement à la lumière de la description qui va suivre de deux installations de production de matériau de moulage conformes à son principe, donnée uniquement à titre d'exemple et faite en référence aux dessins annexés dans lesquels :
- la figure 1 est un schéma de principe partiel d'une installation de production de matériau de moulage conforme à l'invention ;
- la figure 2 est un schéma de principe d'un dispositif d'alimentation en additif d'un mélangeur de l'installation de la figure 1 ;
- la figure 3 est un schéma de principe d'une unité de façonnage d'un matériau de moulage en feuilles destiné à être raccordé à la partie de l'installation de la figure 1 et
- la figure 4 est un schéma de principe d'une unité de façonnage d'un matériau de moulage en vrac destiné à être raccordé à la partie de l'installation de la figure 1.

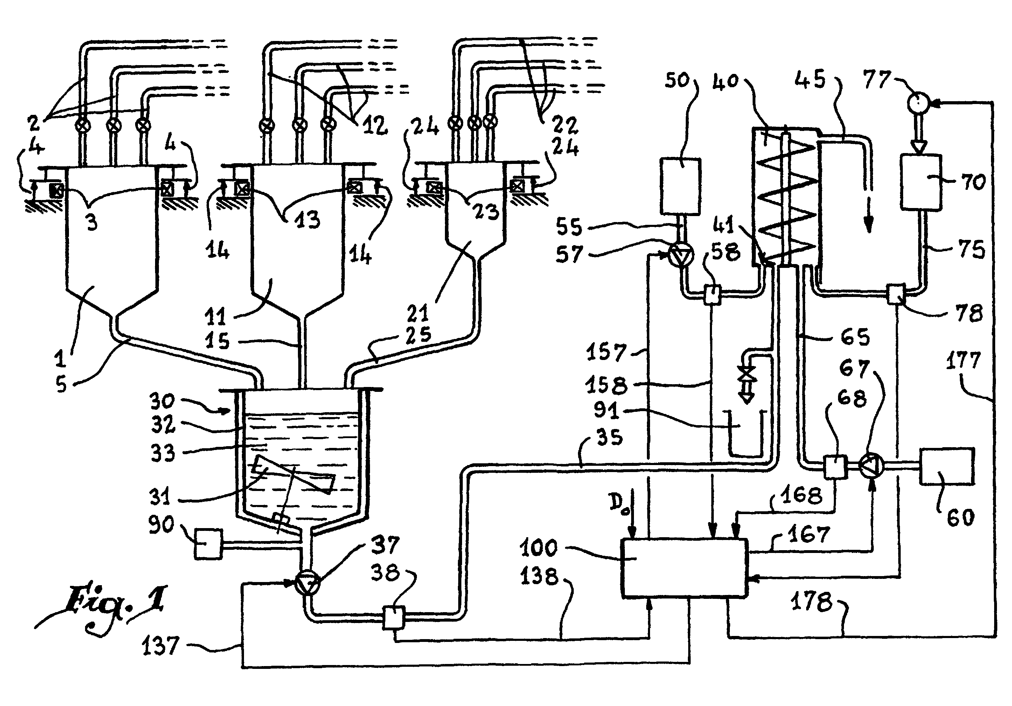

A la figure 1, un réservoir stockeur 1 est prévu pour être alimenté à partir de plusieurs conduites 2 en charges minérales ou organiques. Chaque conduite 2 véhicule un type de charge, étant entendu que le stockeur peut être alimenté simultanément ou sélectivement avec plusieurs types de charge. Le stockeur 1 repose sur des plots 3 couplés à un système de pesée 4 permettant de déterminer la masse totale du stockeur et du ou des produits qu'elle contient. Un second réservoir stockeur 11 est destiné à être alimenté à partir de plusieurs conduites 12 véhiculant chacune une résine synthétique de composition déterminée. Comme précédemment, le stockeur 11 peut être alimenté simultanément ou sélectivement avec plusieurs résines. Le réservoir stockeur 11 repose sur des plots 13 couplés à un système de pesée 14. Un troisième réservoir stockeur 21, de plus petites dimensions que les précédents, est prévu pour recevoir un ou plusieurs catalyseurs, tel qu'un péroxyde organique, délivré par des conduites 22. Le réservoir stockeur 21 repose sur des plots 23 couplés à un système de pesée 24.

Les stockeur 1, 11 et 21 sont respectivement connectés à un malaxeur 30 par des conduits 5, 15 et 25. Ce malaxeur 30 comprend un moyen de brassage schématiquement représenté par une hélice 31, et de moyens de contrôle de la température de son contenu, schématiquement représentés par une enveloppe à double peau 32. Le mélange du contenu des stockeurs 1, 11 et 21 permet de fabriquer une pâte 33, dénommée pâte-mère.

Le malaxeur 30 est relié, par un conduit 35, à un mélangeur à vis sans fin 40 dans lequel la pâte-mère suit un trajet sensiblement hélicoïdal de bas en haut. La zone d'entrée 41 du mélangeur 40 est également reliée à un réservoir 50 d'un produit de modification de la viscosité de la pâte-mère tel que, par exemple, de la magnésie (M_{g}O). On note 55 le conduit reliant le réservoir 50 à la zone d'entrée 41 du mélangeur 40. La zone d'entrée 41 est également reliée à un réservoir de colorant 60 par l'intermédiaire d'un conduit 65. Enfin, dans le cas où l'on souhaite réaliser un matériau de moulage électriquement conducteur, la zone d'entrée 41 du mélangeur 40 est reliée à un réservoir 70 de charges conductrices, telles que du graphite couramment dénommé "noir de carbone". On note 75 le conduit reliant le réservoir 70 au mélangeur 40.

La fonction du mélangeur 40 est de mélanger les produits issus des éléments 30, 50, 60 et 70 selon des proportions prédéterminées qui conditionnent les propriétés mécaniques et esthétiques des pièces réalisées grâce au matériau de moulage fabriqué dans l'installation. On nomme "pâte définitive" la pâte formée dans le mélangeur 40.

Une pompe 37 est disposée dans le conduit 35 à proximité de la sortie du malaxeur 30 afin de déplacer la pâte-mère 33 du malaxeur 30 vers le mélangeur 40. Un débitmètre massique 38 est également disposé sur le conduit 35 en aval de la pompe 37. Le signal de sortie 138 du débitmètre 38 est fourni à une unité de contrôle 100 constituée par un automate programmable ou un ordinateur. Ce signal 138 est exploité par l'unité 100 pour commander différents éléments constitutifs de l'installation.

On note D₀ une valeur de consigne de débit communiquée à l'unité 100 par tout moyen approprié tel qu'un clavier. Cette valeur peut être la valeur du débit de pâte-mère devant être injectée dans le mélangeur 40. Elle peut être, par exemple, égale à 40 kg par minute. L'unité de contrôle 100 est alors en mesure de piloter, grâce à un signal 137, la pompe 37 en utilisant le signal 138 comme valeur de contre-réaction.

On note que le conduit 35 est complètement fermé entre la sortie du malaxeur 30 et l'entrée 41 du mélangeur 40, de sorte que la pâte-mère qu'il contient ne risque pas de se détériorer par contact avec l'air. Ce conduit 35 peut être nettoyé, en fonction des besoins, grâce à une source 90 d'air ou de solvant permettant d'injecter, en amont du conduit 35, des produits de nettoyage qui peuvent être déversés dans une purge 91 à proximité de l'extrémité aval du conduit 35.

On note 57 et 67 les pompes utilisées pour entraîner respectivement la magnésie et le colorant de leurs réservoirs respectifs 50 et 60 vers le mélangeur 40. On note 77 une alimentation commandée en air sous pression du réservoir 70 de charges conductrices. L'unité 100 est prévue pour contrôler, respectivement au moyen de signaux 157, 167 et 177, les éléments 57, 67 et 77, de sorte que le débit des additifs est fonction du signal du débitmètre 38, c'est-à-dire du débit effectif de la pâte-mère 33.

Pour obtenir une précision encore accrue, on prévoit que les conduits 55, 65 et 75 sont chacun équipés d'un débitmètre 58, 68 et 78 apte à délivrer un signal 158, 168 et 178 à l'unité de contrôle 100. Ainsi, l'unité 100 peut contrôler les éléments 37, 57, 67 et 77 en fonction des valeurs détectées par les débitmètres 38, 58, 68 et 78, étant entendu que certaines des valeurs détectées par les débitmètres peuvent servir à la vérification du bon fonctionnement de l'installation.

Tout comme le conduit 35, les conduits 55, 65 et 75 sont fermés, de sorte que les produits qu'ils contiennent ne risquent pas d'être altérés au contact de l'air et qu'ils peuvent être nettoyés à la manière décrite en référence au conduit 35.

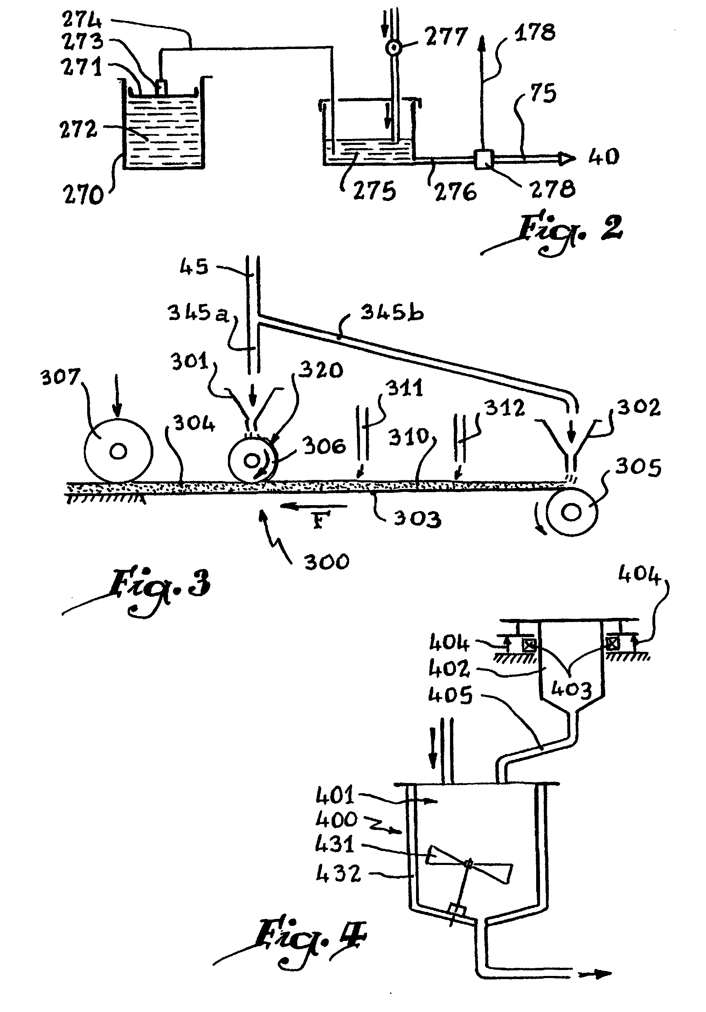

Lorsque l'un ou plusieurs des additifs est visqueux, comme c'est le cas des charges conductrices réalisées à base de noir de carbone, on peut utiliser, pour l'alimentation du mélangeur 40 en additif, la partie de l'installation représentée à la figure 2. Celle-ci comprend un réservoir 270 muni d'un couvercle 271 destiné à reposer sur la masse 272 d'additif contenue dans le réservoir 270. Sur le couvercle 271 est montée une pompe de gavage 273 reliée par un tuyau 274 au volume intérieur d'un pot sous pression 275 dont le raccord de sortie 276 est prévu pour être connecté au conduit 75, lui même connecté à l'entrée 41 du mélangeur 40. Une source d'air commandée 277 est prévue pour mettre en pression le volume intérieur du pot 275.

Le fonctionnement est le suivant :

La pompe 273 envoie régulièrement l'additif 272 situé dans le réservoir 270 vers le pot sous pression 275. La pression régnant dans le pot 275 du fait de l'alimentation en air par la source 277, permet de diminuer la viscosité du produit 272 qui peut être évacué par le conduit 75 à un débit contrôlé par un débitmètre 278. Comme précédemment, on note 178 le signal de débit fourni par le débitmètre à l'unité 100 et 177 le signal de contrôle émis par l'unité 100 à destination de la source 277.

L'utilisation du débitmètre massique 38 dans l'installation de l'invention permet de contrôler efficacement la quantité de pâte-mère transitant par le conduit 35 indépendamment des variations de densité de cette pâte-mère, qui peut être comprise entre environ 1,6 et environ 1,95. Des essais satisfaisants ont été obtenus avec un débitmètre massique basé sur la mesure de l'accélération de Coriolis.

Le dispositif 300 représenté à la figure 3 est destiné à la fabrication d'un matériau de moulage en feuilles (SMC) avec la pâte définitive produite, à partir de la pâte-mère 33, dans le mélangeur 40. Pour ce faire, le dispositif 300 est raccordé au conduit de sortie 45 du mélangeur 40, ce conduit 45 étant divisé en deux branches 345a et 345b prévues pour alimenter deux racles 301 et 302 de répartition de la pâte sur la largeur de deux films plastiques 303 et 304 dévidés par deux rouleaux 305 et 306.

Le film 303 défile du rouleau 305 vers un cylindre de calandrage 307 dans le sens de la flèche F. La pâte définitive est déversée par le racle 302 à proximité du rouleau 305 sur la face supérieure du film 303. On note 310 la couche de pâte définitive, déposée sur le film 303 et qui défile dans le sens de la flèche F à la figure 3. Deux buses 311 et 312 sont prévues au-dessus du film 303 et de la couche 310 pour le déversement de fibres de verres, métalliques ou organiques sur la couche 310. On note que les charges issues des buses 311 et 312 peuvent être identiques ou différentes.

Une seconde partie 320 de la pâte définitive est déversée sur le film 304, en cours de dévidage du rouleau 306. Cette seconde couche 320 vient se superposer à la couche 310 et aux charges qu'elle contient en aval du rouleau 306, l'ensemble multicouche ainsi constitué étant ensuite comprimé par le rouleau de calandrage 307.

Lorsque l'on souhaite réaliser un matériau de moulage en vrac (BMC ou AMC), on peut utiliser le dispositif 400 de la figure 4 pour former une seconde installation. Le dispositif 400 est destiné à être alimenté en pâte définitive à partir du mélangeur 40 représenté à la figure 1. Il comprend essentiellement un second malaxeur 401 dont l'entrée est connectée au conduit de sortie 45 du mélangeur 40 et à un réservoir stockeur 402 de fibres de renfort, telles que par exemple des fibres de verre coupées ayant une longueur moyenne comprise entre 10 et 50 mm, de préférence de l'ordre de 25 mm. Le réservoir 402 est ainsi alimenté en pâte définitive, produite dans le mélangeur 40, et en fibres de renfort. Il repose sur des plots 403 couplés à un système de pesée 404 et est relié au malaxeur 401 par un conduit 405. Tout comme le malaxeur 30, le malaxeur 401 comprend un système de mélange, représenté par une hélice 431, et un système de contrôle en température, représenté par une enveloppe à double peau 432.

Quel que soit le type de produit réalisé, à l'aide d'un dispositif de finalisation 300 ou 400, le fonctionnement du système de l'invention permet, à partir d'une valeur de débit de consigne D₀, égale à par exemple 40 kg/mn, de commander la pompe 37 en boucle fermée à partir du signal 138 du débitmètre 38. L'unité 100 peut également accéder à des tables de valeurs lui permettant de déterminer, en fonction du type de matériau à réaliser, quelles proportions de produit de modification de la viscosité, de colorant et, éventuellement, de charges conductrices doivent être utilisées. Par exemple, le débit de magnésie doit être de 400 g/mn alors que le débit de colorant est de 1,2 kg/mn et que le débit de charges conductrices est de 1 kg/mn.

L'unité 100 peut alors contrôler les dispositifs 57, 67 et 77 en fonction de ces valeurs, alors que les signaux 158, 168 et 138 permettent une vérification permanente du bon fonctionnement de l'installation.

Le débit total de pâte en sortie du mélangeur 40 est ainsi de 45,6 kg/mn, ce débit étant connu avec précision lors de son introduction dans l'un des dispositifs 300 ou 400.
* Translator's note:
Presumably "138" is a clerical error for "38" here.

## Revendications

1. Installation de production de matériau de moulage par injection et compression, à base de résine synthétique et de charges minérales ou organiques, ladite installation comprenant :
- un stockeur (1) de charges alimenté sélectivement, à partir de plusieurs sources (2) de charges différentes, en fonction de la composition choisie ;
- un stockeur (11) de résine alimenté sélectivement, à partir de plusieurs sources (12) de résines de compositions différentes, en fonction de la composition choisie ;
- au moins un stockeur (21) de catalyseur alimenté sélectivement, à partir de plusieurs sources (22) de catalyseurs de compositions différentes, en fonction de la composition choisie ;
- lesdits stockeurs étant prévus pour alimenter un malaxeur (30) apte à mélanger lesdites charges, ladite résine et le ou lesdits catalyseurs pour constituer une pâte-mère (33) du matériau de moulage ;
- un mélangeur à vis sans fin (40) dont l'entrée (41) est connectée à la sortie dudit malaxeur, le débit de pâte-mère en sortie dudit malaxeur (30) étant contrôlé au moyen d'un débitmètre massique (38) délivrant un signal (138) à une unité de contrôle (100) pilotant une pompe d'entraînement (37) de la pâte-mère (33) entre ledit malaxeur (30) et ledit mélangeur (40) ;
- ladite entrée dudit mélangeur à vis sans fin étant également connectée à au moins une source (50, 60, 70) d'un additif.

2. Installation selon la revendication 1, **caractérisée en ce que** le débit d'au moins un additif (50, 60, 70) en entrée (41) dudit mélangeur (40) est piloté par ladite unité de contrôle (100) en fonction dudit signal (138) dudit débitmètre massi^Eque (38).

3. Installation selon la revendication 1 ou 2, **caractérisé en ce qu'**au moins une ligne (55, 65, 75) d'alimentation dudit mélangeur (40) en additif (50, 60, 70) comprend un débitmètre (58, 68, 78) délivrant un signal (158, 168, 178) à ladite unité de contrôle (100).

4. Installation selon la revendication 3, **caractérisée en ce que** ladite unité de contrôle (100) est apte à piloter ladite pompe (37) d'entraînement de la pâte-mère et les moyens (57, 67, 77) d'alimentation en additifs du mélangeur (40) en fonction dudit signal (138) dudit débitmètre massique (38) et du signal (158, 168, 178) d'au moins un débitmètre (58, 68, 78) d'une ligne (55, 65, 75) d'alimentation en additif.

5. Installation selon l'une quelconque des revendications 2 à 4, **caractérisée en ce que** les moyens d'alimentation en additif (70) comprennent une pompe de gavage (273) apte à pomper dans un réservoir (270) dudit additif et à alimenter en additif un pot sous pression (275), ledit pot sous pression étant alimenté en air de pressurisation à partir d'une source (277) pilotée par ladite unité de contrôle (100) en fonction dudit signal (138) dudit débitmètre massique (138) et, éventuellement, du signal (178) d'un débitmètre (78) de contrôle de débit dudit additif.

6. Installation de production de matériau de moulage en feuilles (SMC) selon l'une des revendications précédentes, **caractérisée en ce que** la sortie (45) dudit mélangeur (40) est raccordée à deux racles (301, 302) de dépôt d'une pâte définitive sur un support souple (303, 304) en cours de défilement (F), des moyens (311, 312) de dépôt de charges dans une première couche (310) de pâte définitive en cours de défilement sur le support souple (303) étant disposés entre lesdites deux racles (301, 302), de telle sorte que lesdites charges sont au moins partiellement recouvertes par une seconde couche (320) de pâte définitive issue de l'un (301) des racles.

7. Installation selon la revendication 6, **caractérisée en ce qu'**elle comprend deux dispositifs (311, 312) de dépôt de fibres de vere, métalliques ou organiques dans la couche (310) de pâte définitive en cours de défilement (F).

8. Installation selon la revendication 7, **caractérisée en ce que** lesdits deux dispositifs (311, 312) sont prévus pour déposer des charges différentes dans la couche (310) de la pâte définitive.

9. Installation de production de matériau de moulage en vrac selon l'une des revendications 1 à 5, **caractérisée en ce que** la sortie (45) dudit mélangeur (40) est raccordée à un second malaxeur (401) alimenté également en charges, sous forme de fibres coupées, à partir d'un réservoir-stockeur (402).

## Claims

1. Installation for producing moulding material by injection and compression, based on synthetic resin and mineral or organic charges, said installation comprising:
- a charges store (1), supplied selectively from a plurality of sources (2) of various charges, in dependence on the selected composition;
- a resin store (11), supplied selectively from a plurality of sources (12) of resins of various compositions, in dependence on the selected composition;
- at least one catalyst store (21), supplied selectively from a plurality of sources (22) of catalysts of various compositions, in dependence on the selected composition;
- said stores being provided to supply a kneader (30) capable of mixing said charges, said resin and said catalyst or said catalysts in order to form a mother paste (33) of the moulding material;
- an endless screw mixer (40), the inlet (41) of which is connected to the outlet of said mixer, the delivery of mother paste at the outlet of said kneader (30) being checked by means of a mass delivery meter (38), which issues a signal (138) to a checking unit (100) which drives a pump (37) for entraining the mother paste (33) between said kneader (30) and said mixer (40);
- said inlet of said endless screw mixer also being connected to at least one source (50, 60, 70) of an additive.

2. Installation according to claim 1, **characterised in that** the delivery of at least one additive (50, 60, 70) to the inlet (41) of said mixer (40) is driven by said checking unit (100) in dependence on said signal (138) from said mass delivery meter (38).

3. Installation according to claim 1 or 2, **characterised in that** at least one supply line (55, 65, 75) for supplying said mixer (40) with additive (50, 60, 70) comprises a delivery meter (58, 68, 78), which issues a signal (158, 168, 178) to said checking unit (100).

4. Installation according to claim 3, **characterised in that** said checking unit (100) is capable of driving said pump (37) for entraining the mother paste and the means (57, 67, 77) for supplying additives to the mixer (40) in dependence on said signal (138) from said mass delivery meter (38) and on the signal (158, 168, 178) from at least one delivery meter (58, 68, 78) of an additive supply line (55, 65, 75).

5. Installation according to any of claims 2 to 4, **characterised in that** the additive supply means (70) comprise a force-feeding pump (273), which is capable of pumping into a tank (270) of said additive and of supplying additive to a pressurised container (275), said pressurised container being supplied with pressurising air from a source (277) driven by said checking unit (100) in dependence on said signal (138) from said mass delivery meter (138*) and, possibly, on the signal (178) from a delivery meter (78) for checking the delivery of said additive.

6. Installation for producing moulding material in sheets (SMC) according to one of the preceding claims, **characterised in that** the outlet (45) of said mixer (40) is connected to two scrapers (301, 302) for depositing a definitive paste on a flexible support (303, 304) on the travel path (F), means (311, 312) for depositing charges in a first layer (310) of definitive paste on the flexible support (303) on the travel path being disposed between said two scrapers (301, 302), so that said charges are at least partially covered by a second layer (320) of definitive paste coming from one (301) of the scrapers.

7. Installation according to claim 6, **characterised in that** it comprises two devices (311, 312) for depositing glass, metallic or organic fibres in the layer (310) of definitive paste on the travel path (F).

8. Installation according to claim 7, **characterised in that** said two devices (311, 312) are provided in order to deposit various charges in the layer (310) of the definitive paste.

9. Installation for producing moulding material in bulk according to one of claims 1 to 5, **characterised in that** the outlet (45) of said mixer (40) is connected to a second kneader (401) which is also supplied with charges, in the form of cut fibres, from a storage tank (402).

## Patentansprüche

1. Anlage zur Herstellung eines Gusswerkstoffes durch Spritzguss und Formpressen auf Basis von Kunstharz und mineralischen oder organischen Füllstoffen, wobei die Anlage Folgendes umfasst:
- eine Füllstofflagereinrichtung (1), die selektiv von mehreren Quellen (2) von unterschiedlichen Füllstoffen in Abhängigkeit von der gewählten Zusammensetzung beschickt wird;
- eine Harzlagereinrichtung (11), die selektiv von mehreren Quellen (12) von Harz mit unterschiedlichen Zusammensetzungen je nach der gewählten Zusammensetzung beschickt wird;
- mindestens eine Katalysatorlagereinrichtung (21), die selektiv von mehreren Quellen (22) von Katalysatoren mit unterschiedlichen Zusammensetzungen je nach der gewählten Zusammensetzung beschickt wird;
- wobei die Lagereinrichtungen dazu vorgesehen sind, eine Mischanlage (30) zu beschicken, die die Füllstoffe, das Harz und den bzw. die Katalysatoren mischen kann, um eine Mutterpaste (33) für die Gusswerkstoffe zu bilden;
- einen Schneckenmischer (40), dessen Eingang (41) an den Ausgang der Mischanlage angeschlossen ist, wobei der Durchsatz an Mutterpaste am Ausgang der Mischanlage (30) mit Hilfe eines Massedurchflussmessers (38) kontrolliert wird, der ein Signal (138) an eine Kontrolleinheit (100) liefert, die eine Förderpumpe (37) für die Mutterpaste (33) zwischen der Mischanlage (30) und dem Mischer (40) steuert;
- wobei der Eingang des Schneckenmischers auch an mindestens eine Quelle (50, 60, 70) eines Zusatzstoffes angeschlossen ist.

2. Anlage nach Anspruch 1, **dadurch gekennzeichnet, dass** der Durchsatz von mindestens einem Zusatzstoff (50, 60, 70) am Eingang (41) des Mischers (40) durch die Kontrolleinheit (100) in Abhängigkeit von dem Signal (138) des Massedurchflussmessers (38) gesteuert wird.

3. Anlage nach Anspruch 1 oder 2, **dadurch gekennzeichnet, dass** mindestens eine Leitung (55, 65, 75) zur Beschickung des Mischers (40) mit Zusatzstoff (50, 60, 70) einen Durchflussmesser (58, 68, 78) umfasst, der ein Signal (158, 168, 178) an die Kontrolleinheit (100) liefert.

4. Anlage nach Anspruch 3, **dadurch gekennzeichnet, dass** die Kontrolleinheit (100) die Förderpumpe (37) der Mutterpaste und die Mittel (57, 67, 77) zur Beschickung des Mischers (40) mit Zusatzstoff in Abhängigkeit von dem Signal (138) des Massedurchflussmessers (38) und dem Signal (158, 168, 178) von mindestens einem Durchflussmesser (58, 68, 78) einer Leitung (55, 65, 75) zur Beschickung mit Zusatzstoff steuert.

5. Anlage nach einem der Ansprüche 2 bis 4, **dadurch gekennzeichnet, dass** die Mittel zur Beschickung mit einem Zusatzstoff (70) eine Überdruckpumpe (273) umfassen, die in einen Behälter (270) dieses Zusatzstoffes pumpen und einen Topf unter Druck (275) mit einem Zusatzstoff beschicken kann, wobei dieser Topf unter Druck mit Druckluft von einer Quelle (277) beschickt werden kann, die von der Kontrolleinheit (100) in Abhängigkeit von dem Signal (138) des Massedurchflussmessers (138) und eventuell dem Signal (178) eines Durchflussmessers (78) zur Durchsatzkontrolle dieses Zusatzstoffes gesteuert wird.

6. Anlage zur Herstellung von Gussmaterial in Plattenform (SMC) nach einem der vorhergehenden Ansprüche, **dadurch gekennzeichnet, dass** der Ausgang (45) des Mischers (40) an zwei Abstreifer (301, 302) zur Aufbringung einer endgültigen Paste auf einen weichen Träger (303, 304) während des Ablaufens (F) angeschlossen ist, wobei Mittel (311, 312) zur Aufbringung von Füllstoffen in eine erste Schicht (310) der endgültigen Paste auf den weichen Träger (303) während des Ablaufens zwischen den beiden Abstreifern (301, 302) angeordnet sind, so dass die Füllstoffe zumindest teilweise von einer zweiten Schicht (320) der endgültigen Paste bedeckt sind, die von einem der Abstreifer (301) kommt.

7. Anlage nach Anspruch 6, **dadurch gekennzeichnet, dass** sie zwei Vorrichtungen (311, 312) zur Aufbringung von Glasfasern, metallischen oder organischen Fasern in die Schicht (310) der endgültigen Paste während des Ablaufens (F) umfasst.

8. Anlage nach Anspruch 7, **dadurch gekennzeichnet, dass** die beiden Vorrichtungen (311, 312) dazu vorgesehen sind, verschiedene Füllstoffe in die Schicht (310) der endgültigen Paste aufzubringen.

9. Anlage zur Herstellung von Gussmaterial in loser Schüttung nach einem der Ansprüche 1 bis 5, **dadurch gekennzeichnet, dass** der Ausgang (45) des Mischers (40) an eine zweite Mischanlage (401) angeschlossen ist, die ebenfalls mit Füllstoffen in Form von geschnittenen Fasern von einem Lagerbehälter (402) aus beschickt wird.
